# EUROPÄISCHE PATENTSCHRIFT

(11) **EP 1 789 295 B1**
(45) Veröffentlichungstag und Bekanntmachung des Hinweises auf die Patenterteilung: **02.03.2011**
(21) Anmeldenummer: 05775943.3
(22) Anmeldetag: 29.08.2005
(51) Int. Cl.: B60T 13/74, H02H 7/085, H02K 7/10

(54) **VORRICHTUNG UND VERFAHREN ZUM BETRIEB EINER ELEKTROMECHANISCH BETÄTIGBAREN FESTSTELLBREMSE**
DEVICE AND METHOD FOR OPERATION OF AN ELECTROMECHANICALLY-OPERATED PARKING BRAKE
DISPOSITIF ET PROCEDE POUR FAIRE FONCTIONNER UN FREIN DE STATIONNEMENT A ACTIONNEMENT ELECTROMECANIQUE

(30) Priorität: 01.09.2004 DE 102004042673
(43) Veröffentlichungstag der Anmeldung: 30.05.2007
(73) Patentinhaber: Continental Teves AG & Co. oHG, 60488 Frankfurt (DE)
(72) Erfinder: KLUSEMANN, Rainer, 60529 Frankfurt am Main (DE); WIENS, Eduard, 61449 Steinbach (DE); SCHULZE, Michael-Oliver, 64295 Darmstadt (DE)
(86) Internationale Anmeldenummer: PCT/EP2005/054237
(87) Internationale Veröffentlichungsnummer: WO 2006/024635

(56) Entgegenhaltungen:
- WO-A-90/15743
- CH-A- 211 189
- US-A- 2 835 353

## Beschreibung

Die vorliegende Erfindung betrifft ein Verfahren zum Betrieb einer elektromechanisch betätigbaren Feststellbremse für Kraftfahrzeuge, die im wesentlichen aus einem Bedienelement, einer elektronischen Steuereinheit und mindestens einer elektromechanischen Einheit zur Erzeugung einer Zuspannkraft sowie mit durch die Einheit zuspannbaren Bremseinrichtungen an wenigstens einer Fahrzeugachse gebildet wird, wobei die elektromechanische Einheit aus einem Elektromotor und einer mechanischen Anordnung zur Betätigung der Bremseinrichtungen gebildet ist, und wobei eine Rutschkupplung wirkungsmäßig zwischen dem Elektromotor und der mechanischen Anordnung angeordnet ist. Außerdem betrifft die Erfindung eine Vorrichtung zur Durchführung des Verfahrens.

Aus der CH 21 11 89 A ist ein Elektromotor mit Rutschkupplung bekannt. Beim Rutschen der Kupplung bewirkt das Verdrehen der beiden Kupplungshälften zueinander eine axiale Relativbewegung der Kupplungshälften. Dadurch wird ein Motor-Speisestromschalter im Sinne eines Ausschaltens des Motors betätigt. Bei der vorbekannten Anordnung wird zwar der Motor ausgeschaltet, sobald die Rutschkupplung rutscht bzw. sobald sich in der motorisch angetriebenen Einrichtung ein Widerstand zeigt, allerdings ist dazu die Verwendung einer zusätzlichen Mechanik sowie eines zusätzlichen Schalters notwendig. Die relativ aufwendige Anordnung ist daher für den bei Kraftfahrzeugen beschränkten Bauraum weniger geeignet.

Es ist daher Aufgabe der vorliegenden Erfindung ein Verfahren zu entwickeln, das ein Rutschen der Rutschkupplung zuverlässig erkennt und dabei eine Vorrichtung verwendet, die gegen mechanische Einflüsse geschützt ist und auf kleinstem Bauraum realisierbar ist.

Diese Aufgabe wird verfahrensmäßig dadurch gelöst, dass die Stromaufnahme des Elektromotors dahingehend ausgewertet wird, dass ein Rutschen der Rutschkupplung erkannt wird.

Dabei ist vorgesehen, dass ein Rutschen der Rutschkupplung erkannt wird, wenn die Stromaufnahme des Elektromotors größer als ein vorbestimmter Wert ist und die Stromaufnahme mit einer Amplitude, die größer als ein vorbestimmter Wert ist, schwingt.

Eine besonders vorteilhafte Weiterbildung des erfindungsgemäßen Verfahrens sieht vor, dass die Schwingungen der Stromaufnahme einer Tiefpassfilterung unterworfen werden. Außerdem wird die Stromaufnahme mit Hilfe eines Stromsensors ermittelt und der elektronischen Steuereinheit zugeführt.

Bei einer weiteren, besonders vorteilhaften Weiterbildung des erfindungsgemäßen Verfahrens ist vorgesehen, dass die Stromzufuhr des Elektromotors nach Erkennung eines Rutschens der Rutschkupplung unterbrochen wird.

Die Aufgabe wird außerdem erfindungsgemäß dadurch gelöst, dass die elektronische Steuereinheit Mittel zur Auswertung der Stromaufnahme des Elektromotors aufweist, sodass ein Rutschen der Rutschkupplung erkennbar ist. Dabei ist ein Stromsensor vorgesehen, der die Stromaufnahme des Elektromotors ermittelt und der elektronischen Steuereinheit zuführt. Die Erfindung wird nachfolgend anhand eines Ausführungsbeispiels im Zusammenhang mit der beiliegenden Zeichnung näher erläutert. In der Zeichnung zeigen:
- Fig. 1: ein schematisch dargestelltes Schaltbild eines hydraulischen Bremssystems, das eine elektromecha- nische Einheit zur Durchführung von Feststellbrems- vorgängen aufweist und an der das erfindungsgemäße Verfahren durchführbar ist;
- Fig. 2: eine schematische Darstellung einer Rutschkupplung, die wirkungsmäßig zwischen einem Elektromotor und einer mechanischen Anordnung zur Betätigung von Bremseinrichtungen angeordnet ist;
- Fig. 3: ein Ablaufdiagramm des erfindungsgemäßen Verfah- rens.

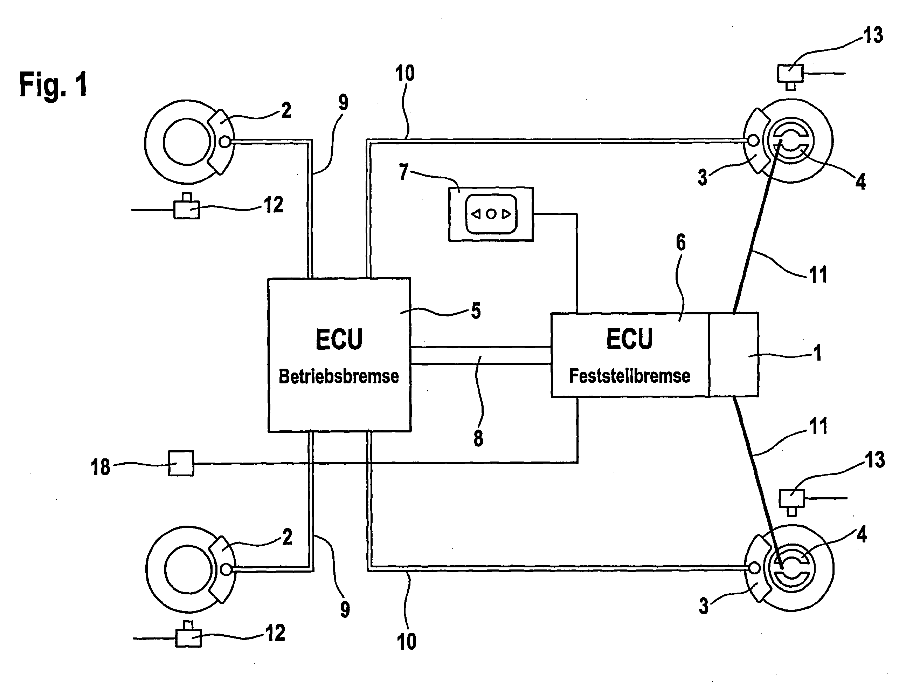

In Fig. 1 ist ein Schaltbild einer hydraulischen Bremsanlage schematisch dargestellt. Die hydraulische Bremsanlage weist an einer ersten Achse, der Vorderachse, Radbremsen 2 auf, die während Betriebsbremsungen über eine hydraulische Leitung 9 mit Druck beaufschlagbar sind. Zur Kontrolle der gewünschten Bremsverzögerung und zur Realisierung einer Blockierschutz-Regelung (Antilock) sowie zur Detektierung der Fahrzeuggeschwindigkeit sind den Rädern der Vorderachse Raddrehzahlsensoren 12 zugeordnet, deren Ausgangssignale einer elektronischen Steuer- und Regeleinheit (ECU) 5 zugeführt werden. Diese elektronische Steuer- und Regeleinheit 5 ist dem Betriebsbremssystem zugeordnet. An einer zweiten Achse, der Hinterachse, sind ebenfalls Radbremsen 3 vorgesehen, die während Betriebsbremsungen über eine zweite hydraulische Leitung 10 mit Druck beaufschlagbar sind. Die Raddrehzahlen der Räder der Hinterachse werden durch Raddrehzahlsensoren 13 ermittelt und der eben erwähnten elektronischen Steuer- und Regeleinheit 5 zugeführt. Außerdem weisen die Räder der Hinterachse neben den Radbremsen 3 für Betriebsbremsungen auch eine elektromechanisch betätigbare Feststellbremse auf. Die elektromechanisch betätigbare Feststellbremse umfasst zwei verriegelbare Bremseinrichtungen 4, die als Trommelbremsen 4 mit jeweils einem nicht näher dargestellten Spreizschloss ausgebildet sind. Das eben genannte Spreizschloss ist mittels eines Kabelzugs 11 von einer elektromechanischen Einheit 1 betätigbar, wonach die Trommelbremsen 4 zugespannt werden. Ein Feststellbremsvorgang wird nach der Betätigung eines Bedienelementes 7 durch den Fahrzeugführer durchgeführt. Dabei werden die Ausgangssignale des Bedienelementes 7 einer der elektromechanischen Feststellbremse zugeordneten elektronischen Steuereinheit (ECU) 6 zugeführt, die die bereits erwähnte elektromechanische Einheit 1 entsprechend ansteuert. Die eben genannte elektronische Steuereinheit 6 sowie die dem Betriebsbremssystem zugeordnete elektronische Steuer- und Regeleinheit 5 kommunizieren miteinander über eine Datenleitung 8, die beispielsweise als CAN-Verbindung ausgebildet sein kann.

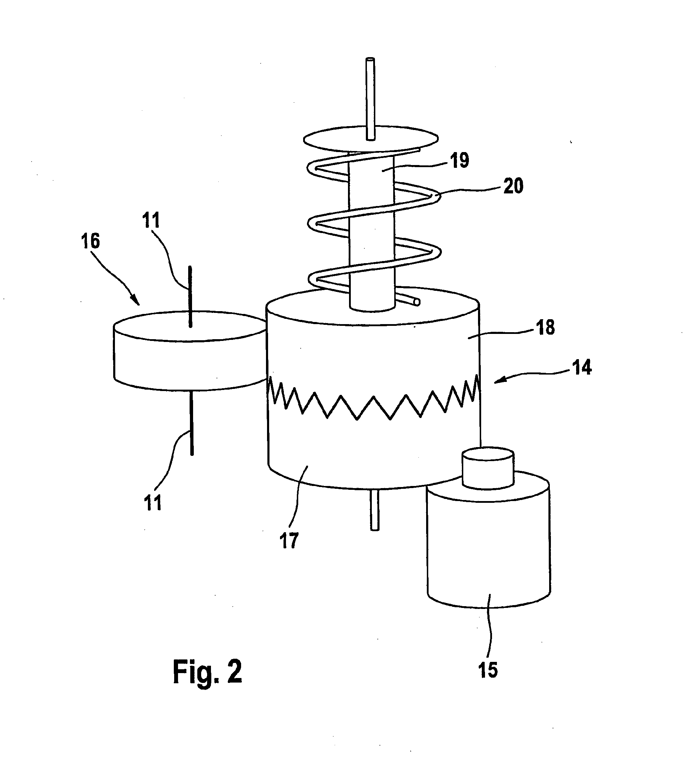

Fig. 2 zeigt eine schematische Darstellung einer Rutschkupplung 14, die wirkungsmäßig zwischen einem Elektromotor 15 und einer mechanischen Anordnung 16 zur Betätigung der anhand von Fig. 1 erwähnten Bremseinrichtungen 4 angeordnet ist. Gemeinsam bilden der Elektromotor 15 und die mechanische Anordnung 16 die bereits erwähnte elektromechanische Einheit 1 zur Erzeugung der Zuspannkraft der Feststellbremse.

Die Rutschkupplung 14 besteht im Wesentlichen aus zwei mit Zähnen versehenen Scheiben 17, 18, wobei die Zähne derart ausgebildet sind, dass die beiden Scheiben 17, 18 ineinander greifen. Die erste Scheibe 17 weist eine axiale Verlängerung 19 auf, die eine Führung für die zweite Scheibe 18 darstellt. Eine Feder 20 spannt die zweite Scheibe 18 gegen die erste Scheibe 17 derart vor, dass die eben erwähnten Zähne miteinander in Eingriff stehen und eine Kraftübertragung von der ersten 17 zur zweiten Scheibe 18 möglich ist. Der Elektromotor 15 steht mit der ersten Scheibe 17 in Verbindung und versetzt diese in Rotation, während die zweite Scheibe 18 mit der mechanischen Anordnung 16, die beispielsweise als eine Gewindemutter-Spindel-Kombination ausgebildet sein kann, in kraftübertragender Verbindung steht. Die Rotation der ersten Scheibe 17 wird über die eben beschriebenen Zähne auf die zweite Scheibe 18 übertragen, wodurch die mechanische Anordnung 16 ebenfalls in Rotation versetzt wird. Die mechanische Anordnung 16 betätigt die anhand von Fig. 1 erwähnten Bremseinrichtungen 4 indem die axiale Länge der mechanischen Anordnung 16 durch die Rotation variiert wird, wodurch eine Zuspannkraft über die mit der mechanischen Anordnung 16 fest verbundenen Kabelzüge 11 auf die als Trommelbremsen ausgebildeten Bremseinrichtungen 4 übertragen wird.

Die Rutschkupplung 14 stellt einen Überlastungsschutz für den Elektromotor 15 dar: Sind Teile der Feststellbremse mechanisch verklemmt, so findet beim Zuspannen oder Lösen der Feststellbremse eine Begrenzung des vom Motor 15 übertragenen Drehmomentes statt, indem sich die zweite Scheibe 18 entgegen der Wirkung der Feder 20 axial von der ersten Scheibe 17 entfernt. Die Zähne der beiden Scheiben 17, 18 rutschen aneinander vorbei. Dieses Rutschen der Rutschkupplung 14 muss möglichst schnell erkannt werden, da das Rutschen den Zähnen der beiden Scheiben 17, 18 schadet und schließlich die Rutschkupplung 14 zerstört. Nach Erkennung des Rutschens der Rutschkupplung 14 wird unmittelbar die Stromzufuhr für den Elektromotor 15 unterbrochen, wonach der Elektromotor 15 und die Scheibe 17 zum Stillstand kommen.

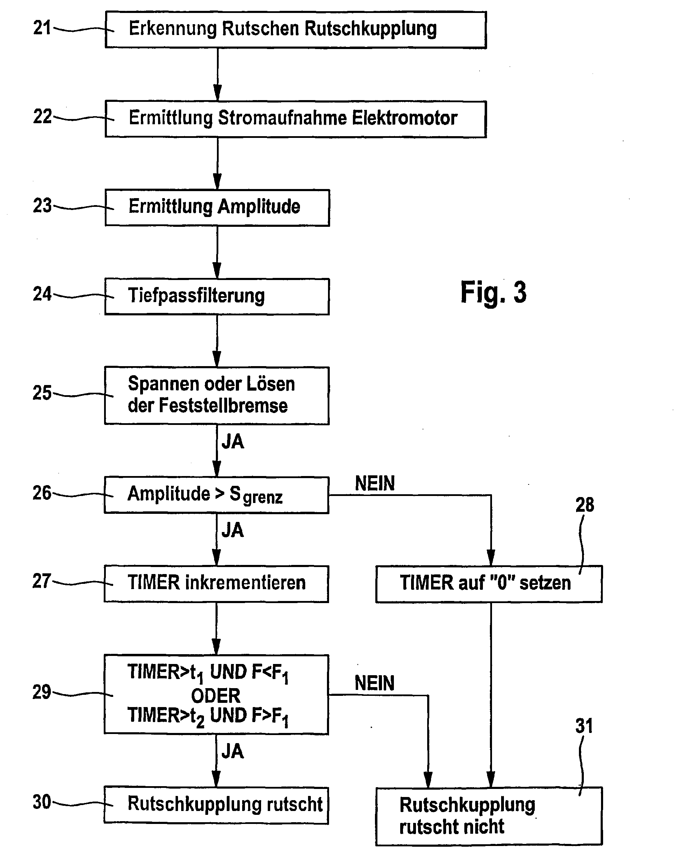

In Fig. 3 ist ein Flussdiagramm zur Erkennung eines Rutschens der Rutschkupplung 15 dargestellt. Das Rutschen der Rutschkupplung 15 wird erfindungsgemäß durch eine Auswertung der Stromaufnahme des Elektromotors 15 erkannt. Bei diesem Verfahren wird die Tatsache verwendet, dass die Stromaufnahme des Elektromotors 15 während des Rutschens der Rutschkupplung 14 relativ groß ist und mit einer relativ großen Amplitude schwingt. Das Rutschen der Rutschkupplung 14 wird dann erkannt, wenn die Stromaufnahme des Elektromotors 15 größer als ein vorbestimmter Wert I_{grenz} ist und die Stromaufnahme mit einer Amplitude, die größer als ein vorbestimmter Wert S_{grenz} ist, schwingt.

Der Verfahrensschritt 21 in Fig. 3 leitet die Erkennung eines Rutschens der Rutschkupplung 14 ein. Zunächst erfolgt eine Ermittlung der Stromaufnahme des Elektromotors 15 (Verfahrensschritt 22) mit Hilfe eines nicht dargestellten Stromsensors, wonach die Amplituden des Stroms des Elektromotors 15 ermittelt wird (Verfahrensschritt 23). Anschließend werden diese Amplituden im Verfahrensschritt 24 einer Tiefpassfilterung unterworfen. Falls der Elektromotor 15 im Sinne eines Spannens oder Lösens der Feststellbremse betrieben wird (Verfahrensschritt 25), wird die Amplitude des Elektromotorstroms mit dem bereits erwähnten Grenzwert S_{grenz} verglichen (Verfahrensschritt 26). Sofern die Amplitude kleiner als der Grenzwert S_{grenz} ist, wird ein Timer auf "Null" gesetzt (Verfahrensschritt 28) und die Ermittlung ergibt, dass die Rutschkupplung 14 nicht rutscht (Verfahrensschritt 31). Andernfalls, also wenn die Amplitude größer als der vorbestimmte Grenzwert S_{grenz} ist, wird der eben erwähnte Timer im Verfahrensschritt 27 inkrementiert. Nach einer bestimmten Zeitdauer t₁ von beispielsweise 500 msec bei gleichzeitig geringerer Zuspannkraft F als ein vorbestimmter Wert F₁ von beispielsweise 800 N oder nach einer bestimmten Zeitdauer t₂ von beispielsweise 2000 msec bei gleichzeitig höherer Zuspannkraft F als der vorbestimmte Wert F₁ wird im Verfahrensschritt 29 und 30 darauf geschlossen, dass die Rutschkupplung 14 rutscht und die Stromzufuhr für den Elektromotor 15 wird sofort unterbrochen. Andernfalls ergibt die Erkennung, dass die Rutschkupplung 14 nicht rutscht (Verfahrensschritt 31).

Dass bei höheren Zuspannkräften eine deutlich längere Dauer bis zur Erkennung eines Rutschens der Rutschkupplung 14 benötigt wird, liegt daran, dass mit der Erzeugung höherer Zuspannkräfte eine höhere Stromaufnahme des Elektromotors 15 mit größeren Stromschwankungen verbunden ist. Erfindungsgemäß ist vorgesehen, dass das eben beschriebene Verfahren in der anhand von Fig. 1 beschriebenen Steuereinheit 6 abläuft. Der vorhin erwähnte, nicht dargestellte Stromsensor ermittelt die Stromaufnahme des Elektromotors 15 und führt sie der elektronischen Steuereinheit 6 zu.

## Patentansprüche

1. Verfahren zum Betrieb einer elektromechanisch betätigbaren Feststellbremse für Kraftfahrzeuge, die im wesentlichen aus einem Bedienelement (7), einer elektronischen Steuereinheit (6) und mindestens einer elektromechanischen Einheit (1) zur Erzeugung einer Zuspannkraft sowie mit durch die Einheit (1) zuspannbaren Bremseinrichtungen (4) an wenigstens einer Fahrzeugachse gebildet wird, wobei die elektromechanische Einheit (1) aus einem Elektromotor (15) und einer mechanischen Anordnung (16) zur Betätigung der Bremseinrichtungen (4) gebildet ist, und wobei eine Rutschkupplung (14) wirkungsmäßig zwischen dem Elektromotor (15) und der mechanischen Anordnung (16) angeordnet ist, **dadurch gekennzeichnet, dass** die Stromaufnahme des Elektromotors (15) dahingehend ausgewertet wird, dass ein Rutschen der Rutschkupplung (14) erkannt wird.

2. Verfahren nach Anspruch 1, **dadurch gekennzeichnet, dass** ein Rutschen der Rutschkupplung (14) erkannt wird, wenn die Stromaufnahme des Elektromotors (15) größer als ein vorbestimmter Wert (I_{grenz}) ist und die Stromaufnahme mit einer Amplitude, die größer als ein vorbestimmter Wert (S_{grenz}) ist, schwingt.

3. Verfahren nach Anspruch 2, **dadurch gekennzeichnet, dass** die Schwingungen der Stromaufnahme einer Tiefpassfilterung unterworfen werden.

4. Verfahren nach einem der vorhergehenden Ansprüche, **dadurch gekennzeichnet, dass** die Stromaufnahme mit Hilfe eines Stromsensors ermittelt und der elektronischen Steuereinheit (6) zugeführt wird.

5. Verfahren nach einem der vorhergehenden Ansprüche, **dadurch gekennzeichnet, dass** die Stromzufuhr des Elektromotors (15) nach Erkennung eines Rutschens der Rutschkupplung (14) unterbrochen wird.

6. Elektromechanisch betätigbare Feststellbremse für Kraftfahrzeuge, die im wesentlichen aus einem Bedienelement (7), einer elektronischen Steuereinheit (6) und mindestens einer elektromechanischen Einheit (1) zur Erzeugung einer Zuspannkraft sowie mit durch die Einheit (1) zuspannbaren Bremseinrichtungen (4) an wenigstens einer Fahrzeugachse gebildet wird, wobei die elektromechanische Einheit (1) aus einem Elektromotor (15) und einer mechanischen Anordnung (16) zur Betätigung der Bremseinrichtungen (4) gebildet ist, und wobei eine Rutschkupplung (14) wirkungsmäßig zwischen dem Elektromotor (15) und der mechanischen Anordnung (16) angeordnet ist, **dadurch gekennzeichnet, dass** die elektronische Steuereinheit (6) Mittel zur Auswertung der Stromaufnahme des Elektromotors (15) aufweist, sodass ein Rutschen der Rutschkupplung (14) erkennbar ist.

7. Elektromechanisch betätigbare Feststellbremse nach Anspruch 6, **dadurch gekennzeichnet, dass** ein Stromsensor vorgesehen ist, der die Stromaufnahme des Elektromotors (15) ermittelt und der elektronischen Steuereinheit (6) zuführt.

## Claims

1. Method for operating an electromechanically activated parking brake for motor vehicles, which parking brake is formed essentially from an operator control element (7), an electronic control unit (6) and at least one electromechanical unit (1) for generating a brake application force and having brake devices (4) which can be applied by the unit (1) to at least one vehicle axle,
wherein the electromechanical unit (1) is formed from an electric motor (15) and a mechanical arrangement (16) for activating the brake devices (4), and wherein a slip clutch (14) is effectively arranged between the electric motor (15) and the mechanical arrangement (16), **characterized in that** the power drain of the electric motor (15) is evaluated to the effect that slipping of the slip clutch (14) is detected.

2. Method according to Claim 1, **characterized in that** slipping of the slip clutch (14) is detected if the power drain of the electric motor (15) is higher than a predetermined value (Iₗᵢₘᵢₜ), and the power drain oscillates with an amplitude which is greater than a predetermined value (Sₗᵢₘᵢₜ).

3. Method according to Claim 2, **characterized in that** the oscillations of the power drain are subjected to low-pass filtering.

4. Method according to one of the preceding claims, **characterized in that** the power drain is determined using a power sensor and is fed to the electronic control unit (6).

5. Method according to one of the preceding claims, **characterized in that** the power supply to the electric motor (15) is interrupted after slipping of the slip clutch (14) has been detected.

6. Electromechanically activated parking brake for motor vehicles, which parking brake is formed essentially from an operator control element (7), an electronic control unit (6) and at least one electromechanical unit (1) for generating a brake application force and having brake devices (4) which can be applied by the unit (1) to at least one vehicle axle,
wherein the electromechanical unit (1) is formed from an electric motor (15) and a mechanical arrangement (16) for activating the brake devices (4), and wherein a slip clutch (14) is effectively arranged between the electric motor (15) and the mechanical arrangement (16), **characterized in that** the electronic control unit (6) has means for evaluating the power drain of the electric motor (15) so that slipping of the slip clutch (14) can be detected.

7. Electromechanically activated parking brake according to Claim 6, **characterized in that** a power sensor is provided which determines the power drain of the electric motor (15) and feeds it to the electronic control unit (6).

## Revendications

1. Procédé pour faire fonctionner un frein de stationnement à commande électromécanique pour véhicules automobiles, lequel est constitué pour l'essentiel d'un élément de commande (7), d'une unité de commande électronique (6) et d'au moins une unité électromécanique (1) pour générer une force de serrage ainsi que de dispositifs de freinage (4) qui peuvent être serrés par l'unité (1) sur au moins un essieu du véhicule, l'unité électromécanique (1) étant constituée d'un moteur électrique (15) et d'un arrangement mécanique (16) pour actionner les dispositifs de freinage (4) et un accouplement à friction (14) étant disposé de manière à agir entre le moteur électrique (15) et l'arrangement mécanique (16), **caractérisé en ce que** le courant consommé par le moteur électrique (15) est interprété en vue de détecter un patinage de l'accouplement à friction (14).

2. Procédé selon la revendication 1, **caractérisé en ce qu'**un patinage de l'accouplement à friction (14) est détecté lorsque le courant consommé par le moteur électrique (15) est supérieur à une valeur prédéfinie (I_{grenz}) et le courant consommé fluctue avec une amplitude qui est supérieure à une valeur prédéfinie (S_{grenz}).

3. Procédé selon la revendication 2, **caractérisé en ce que** les fluctuations du courant consommé sont soumises à un filtrage passe-bas.

4. Procédé selon l'une des revendications précédentes, **caractérisé en ce que** le courant consommé est déterminé à l'aide d'un détecteur de courant et acheminé à l'unité de commande électronique (6).

5. Procédé selon l'une des revendications précédentes, **caractérisé en ce que** l'acheminement du courant au moteur électrique (15) est interrompu après la détection d'un patinage de l'accouplement à friction (14).

6. Frein de stationnement à commande électromécanique pour véhicules automobiles, lequel est constitué pour l'essentiel d'un élément de commande (7), d'une unité de commande électronique (6) et d'au moins une unité électromécanique (1) pour générer une force de serrage ainsi que de dispositifs de freinage (4) qui peuvent être serrés par l'unité (1) sur au moins un essieu du véhicule, l'unité électromécanique (1) étant constituée d'un moteur électrique (15) et d'un arrangement mécanique (16) pour actionner les dispositifs de freinage (4) et un accouplement à friction (14) étant disposé de manière à agir entre le moteur électrique (15) et l'arrangement mécanique (16), **caractérisé en ce que** l'unité de commande électronique (6) présente des moyens pour interpréter le courant consommé par le moteur électrique (15) afin de pouvoir détecter un patinage de l'accouplement à friction (14).

7. Frein de stationnement à commande électromécanique selon la revendication 6, **caractérisé en ce qu'**il est prévu un détecteur de courant qui détermine le courant consommé par le moteur électrique (15) et le communique à l'unité de commande électronique (6).
